# EUROPEAN PATENT APPLICATION

(11) **EP 4 811 217 A1**
(43) Date of publication of application: **23.09.2026**
(21) Application number: 24924948.3
(22) Date of filing: 18.12.2024
(51) Int. Cl.: G06N 3/0475, G06N 3/0455, G06N 3/10

(54) **ELECTRONIC DEVICE FOR PROVIDING GENERATIVE SERVICE WITH IMPROVED SPECIFICATION PERFORMANCE AND CONTROL METHOD THEREFOR**

(30) Priority: 14.02.2024 KR 20240021299
(71) Applicant: Samsung Electronics Co., Ltd., Suwon-si, Gyeonggi-do 16677 (KR)
(72) Inventor: BAN, Daehyun, Suwon-si Gyeonggi-do 16677 (KR); HAN, Seongwon, Suwon-si Gyeonggi-do 16677 (KR)
(74) Representative: Gulde & Partner
(86) International application number: PCT/KR2024/097102
(87) International publication number: WO 2025/173924

(57) **Abstract**

An electronic apparatus is disclosed. The electronic apparatus includes memory storing a first encoder and a second encoder obtained by additionally training a first original encoder and a second original encoder included in a generative neural network model and one or more processors connected to the memory and configured to control the electronic apparatus, and the processor is configured to input a prompt to the first encoder to obtain a first embedding vector in which the prompt is projected into a multidimensional space, input an input image to the second encoder to obtain a second embedding vector in which the input image is projected into the multidimensional space, and obtain a final image generated using a decoder included in the generative neural network model based on the first embedding vector and the second embedding vector, and the first original encoder and the second original encoder are trained based on a first sample prompt of a first hierarchy and a first sample input image corresponding to the first sample prompt, and the first encoder and the second encoder are obtained by additionally training the first original encoder and the second original encoder based on a second sample prompt of a second hierarchy, which is a lower hierarchy of the first hierarchy, and a second sample input image corresponding to the second sample prompt.

## Description

### [Technical Field]

The present disclosure relates to an electronic apparatus and a control method thereof, and more particularly, to an electronic apparatus for providing a generative service with improved personalization performance and a control method thereof.

### [Background Art]

With the development of electronic technology, electronic apparatuses providing various functions have been developed. In particular, recently, generative artificial intelligence (AI) has been developed, thereby improving user convenience.

Generative artificial intelligence refers to an artificial intelligence technology that newly generates similar content by utilizing existing content such as text, audio, and images, and is also referred to as generative AI.

However, the prior art generative artificial intelligence has a limitation in that a level of expression for a specific subject is insufficient.

Accordingly, methods for improving personalization performance by additionally training a decoder included in generative artificial intelligence, such as Dreambooth, LoRA, HyperNetworks, and Textual Inversion, have been developed; however, there is a problem in that generalization performance is degraded and a significant cost is required for training.

### [Disclosure of Invention]

### [Solution to Problem]

In general, a generative neural network model may represent input data in a common embedding space even when the input data are of different types. For example, the generative neural network model may represent input data of different types, such as images, text, and audio, in a common embedding space, and this may be expressed as projecting the input data into the embedding space. Here, the generative neural network model may include encoders for each type. For example, the generative neural network model may include a first encoder configured to receive text and project the text into the embedding space, and a second encoder configured to receive an image and project the image into the embedding space.

The present disclosure maintains the characteristic representation capability (generalization) of the embedding space that has already been trained for generalization, and additionally incorporates personal representation data, which is achieved through the method described below.

According to an embodiment, an electronic apparatus includes memory storing a first encoder and a second encoder obtained by additionally training a first original encoder and a second original encoder included in a generative neural network model and one or more processors connected to the memory and configured to control the electronic apparatus, and the processor is configured to input a prompt to the first encoder to obtain a first embedding vector in which the prompt is projected into a multidimensional space, input an input image to the second encoder to obtain a second embedding vector in which the input image is projected into the multidimensional space, and obtain a final image generated using a decoder included in the generative neural network model based on the first embedding vector and the second embedding vector, and the first original encoder and the second original encoder may be trained based on a first sample prompt of a first hierarchy and a first sample input image corresponding to the first sample prompt, and the first encoder and the second encoder may be obtained by additionally training the first original encoder and the second original encoder based on a second sample prompt of a second hierarchy, which is a lower hierarchy of the first hierarchy, and a second sample input image corresponding to the second sample prompt.

The additional training may be a method of fixing one of the first original encoder and the second original encoder and additionally training the other of the first original encoder and the second original encoder.

One of the first encoder and the second encoder may be identical to one of the first original encoder and the second original encoder, and the other of the first encoder and the second encoder may be an encoder obtained by additionally training the other of the first original encoder and the second original encoder.

The decoder may be trained to generate an image based on an output of at least one of the first original encoder or the second original encoder.

The electronic apparatus may further include a user interface, and the processor may be configured to receive a user command corresponding to a partial region of the input image through the user interface, update the second embedding vector based on the user command, and obtain the final image based on the first embedding vector and the updated second embedding vector.

The processor may be configured to input the user command to the first encoder to obtain a third embedding vector in which the user command is projected into the multidimensional space, and update the second embedding vector based on the third embedding vector.

The processor may be configured to obtain a fourth embedding vector by performing a geometric mean on the first embedding vector and the second embedding vector on a corresponding element-by-element basis, and obtain the final image generated by inputting the fourth embedding vector to the decoder.

The electronic apparatus may further include a communication interface, and the processor may be configured to control the communication interface to transmit the first embedding vector and the second embedding vector to a server, and receive the final image from the server through the communication interface.

The decoder may have a capacity greater than a sum of capacities of the first original encoder and the second original encoder or a sum of capacities of the first encoder and the second encoder.

A control method of an electronic apparatus includes inputting a prompt to a first encoder obtained by additionally training a first original encoder and a second original encoder included in a generative neural network model to obtain a first embedding vector in which the prompt is projected into a multidimensional space, inputting an input image to a second encoder obtained by additionally training the first original encoder and the second original encoder to obtain a second embedding vector in which the input image is projected into the multidimensional space, and obtaining a final image generated using a decoder included in the generative neural network model based on the first embedding vector and the second embedding vector, and the first original encoder and the second original encoder may be trained based on a first sample prompt of a first hierarchy and a first sample input image corresponding to the first sample prompt, and the first encoder and the second encoder may be obtained by additionally training the first original encoder and the second original encoder based on a second sample prompt of a second hierarchy, which is a lower hierarchy of the first hierarchy, and a second sample input image corresponding to the second sample prompt.

The additional training may be a method of fixing one of the first original encoder and the second original encoder and additionally training the other of the first original encoder and the second original encoder.

One of the first encoder and the second encoder may be identical to one of the first original encoder and the second original encoder, and the other of the first encoder and the second encoder may be an encoder obtained by additionally training the other of the first original encoder and the second original encoder.

The decoder may be trained to generate an image based on an output of at least one of the first original encoder or the second original encoder.

The method may further include receiving a user command corresponding to a partial region of the input image, and updating the second embedding vector based on the user command, and the obtaining a final image may include obtaining the final image based on the first embedding vector and the updated second embedding vector.

The updating may include inputting the user command to the first encoder to obtain a third embedding vector in which the user command is projected into the multidimensional space, and updating the second embedding vector based on the third embedding vector.

The obtaining a final image may include obtaining a fourth embedding vector by performing a geometric mean on the first embedding vector and the second embedding vector on a corresponding element-by-element basis, and obtaining the final image generated by inputting the fourth embedding vector to the decoder.

The obtaining a final image may include transmitting the first embedding vector and the second embedding vector to a server, and receiving the final image from the server.

The decoder may have a capacity greater than a sum of capacities of the first original encoder and the second original encoder or a sum of capacities of the first encoder and the second encoder.

In a non-transitory computer-readable recording medium storing a program for executing an operation method of an electronic apparatus according to an embodiment, the operation method includes inputting a prompt to a first encoder obtained by additionally training a first original encoder and a second original encoder included in a generative neural network model to obtain a first embedding vector in which the prompt is projected into a multidimensional space, inputting an input image to a second encoder obtained by additionally training the first original encoder and the second original encoder to obtain a second embedding vector in which the input image is projected into the multidimensional space, and obtaining a final image generated using a decoder included in the generative neural network model based on the first embedding vector and the second embedding vector, and the first original encoder and the second original encoder may be trained based on a first sample prompt of a first hierarchy and a first sample input image corresponding to the first sample prompt, and the first encoder and the second encoder may be obtained by additionally training the first original encoder and the second original encoder based on a second sample prompt of a second hierarchy, which is a lower hierarchy of the first hierarchy, and a second sample input image corresponding to the second sample prompt.

### [Brief Description of Drawings]

FIG. 1 a block diagram illustrating a configuration of an electronic apparatus according to an embodiment;
FIG. 2 is a block diagram illustrating a detailed configuration of an electronic apparatus according to an embodiment;
FIG. 3 is a view provided to explain a generative neural network model according to an embodiment;
FIGS. 4 to 7 are views provided to explain operations according to additional training according to an embodiment;
FIG. 8 is a view provided to explain a method of processing embedding vectors output from a first encoder and a second encoder according to an embodiment;
FIGS. 9 and 10 are views provided to explain a method of specifying a partial region of an input image according to an embodiment;
FIG. 11 is a block diagram illustrating a configuration of an electronic system according to an embodiment; and
FIG. 12 is a flowchart provided to explain a control method of an electronic apparatus according to an embodiment.

### [Mode for Invention]

The present disclosure is to provide an electronic apparatus for providing a generative service with improved personalization performance while reducing training cost and a control method thereof.

Various embodiments in this disclosure and the terms used herein do not intend to limit the technical features in this disclosure to specific embodiments, but should be understood to include various modifications, equivalents or alternatives of the corresponding embodiments.

With respect to the description of the drawings, similar components may be denoted by similar reference numerals.

The singular form of a noun corresponding to an item may include one item or a plurality of items, unless the relevant context clearly indicates otherwise.

In this disclosure, "A or B", "at least one of A and B", "at least one of A or B", "A, B or C", "at least one of A, B and C", and "at least one of A, B, or C" may each include any one of the items listed together in the corresponding phrase, or any possible combination thereof.

The terms "first", "second", "1^{st}," or "2^{nd}," may be used simply to distinguish the corresponding component from other corresponding components, and may limit the corresponding components in other aspects (e.g. : importance or order).

When it is mentioned that one (e.g., first) component is "coupled" or "connected" to another (e.g., second) component, with or without the terms "functionally" or "communicatively", it means that the component can be connected to another component directly (e.g. wired), wirelessly, or through a third component.

Terms such as "have" or "include" are intended to designate the presence of features, numbers, steps, operations, components, parts, or a combination thereof described in this disclosure, but are not intended to exclude the presence or addition of one or more other features, numbers, steps, operations, components, parts, or a combination thereof in advance.

When a component is said to be "connected," "coupled," "supported," or "in contact" with another component, this means not only when the components are directly connected, coupled, supported, or in contact, but also when they are indirectly connected, coupled, supported, or in contact through a third component.

When a component is said to be located "on" another component, this includes not only a case where a component is in contact with another component, but also a case where another component exists between the two components.

The term "and/or" includes a combination of a plurality of related elements described herein or any element of a plurality of related elements described herein.

Hereinafter, the operation principle and embodiments of the present disclosure will be described with reference to the accompanying drawings.

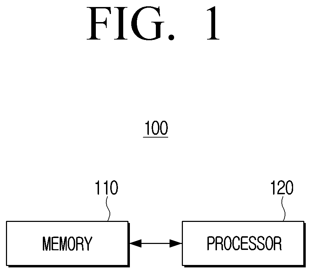

FIG. 1 a block diagram illustrating a configuration of an electronic apparatus 100 according to an embodiment.

The electronic apparatus 100 is an apparatus providing a generative service, and may be implemented as a television (TV), a desktop personal computer (PC), a laptop, a video wall, a large format display (LFD), a digital signage, a digital information display (DID), a projector display, a smartphone, a tablet personal computer (PC), and the like. For example, the electronic apparatus 100 may be an apparatus providing a final image generated from a prompt and an input image. Here, the prompt may be a type of instruction message, and may be text.

However, the present disclosure is not limited thereto, and the electronic apparatus 100 may be any apparatus as long as it provides a generative service.

According to FIG. 1, the electronic apparatus 100 includes memory 110 and a processor 120. However, the present disclosure is not limited thereto, and the electronic apparatus 100 may be implemented in a form in which some components are omitted.

The memory 110 may refer to hardware that stores information such as data in an electrical or magnetic form so that the processor 120 and the like may access the information. To this end, the memory 110 may be implemented as at least one hardware among a non-volatile memory, a volatile memory, a flash memory, a hard disk drive (HDD), a solid state drive (SSD), a random access memory (RAM), and a read only memory (ROM).

The memory 110 may store at least one instruction required for an operation of the electronic apparatus 100 or the processor 120. Here, the instruction is a unit of code instructing an operation of the electronic apparatus 100 or the processor 120, and may be written in machine language that can be understood by a computer. Alternatively, extended display identification data (EDID) and display port configuration data (DPCD) for a display 120 may be stored in the memory 110.

The memory 110 may store data which is information in units of bits or bytes capable of representing characters, numbers, images, and the like. For example, a first encoder and a second encoder may be stored in the memory 110. Here, the first encoder and the second encoder may be encoders obtained by additionally training a first original encoder and a second original encoder included in a generative neural network model. Alternatively, the memory 110 may further store a decoder included in the generative neural network model.

The memory 110 is accessed by the processor 120, and reading/writing/modification/deletion/update of instructions, instruction sets, or data may be performed by the processor 120.

The processor 120 controls the overall operation of the electronic apparatus 100. Specifically, the processor 120 may be connected to each component of the electronic apparatus 100 to control the overall operation of the electronic apparatus 100. For example, the processor 120 may be connected to components such as the memory 110 and a user interface (not shown) to control the operation of the electronic apparatus 100.

The processor 120 may be implemented as one or more processors. In this case, the one or more processors may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors may control one or a combination of other components of the electronic apparatus 100, and may perform operations related to communication or data processing. The one or more processors may execute one or more programs or instructions stored in the memory 110. For example, the one or more processors may execute one or more instructions stored in the memory 110 to perform a method according to an embodiment of the present disclosure.

When the method according to an embodiment of the present disclosure includes a plurality of operations, the plurality of operations may be performed by one processor or may be performed by a plurality of processors. For example, when a first operation, a second operation, and a third operation are performed according to an embodiment, all of the first operation, the second operation, and the third operation may be performed by a first processor, or the first operation and the second operation may be performed by a first processor (for example, a general-purpose processor), and the third operation may be performed by a second processor (for example, an artificial intelligence dedicated processor). For example, a process of quantizing a neural network model according to an embodiment of the present disclosure may be performed by a general-purpose processor, and a process of training or inferring the quantized neural network model may be performed by an artificial intelligence-dedicated processor.

The one or more processors may be implemented as a single core processor including one core or as one or more multicore processors including a plurality of cores (for example, homogeneous multicore or heterogeneous multicore). When the one or more processors are implemented as a multicore processor, each of the plurality of cores included in the multicore processor may include an internal memory of the processor such as a cache memory and an on-chip memory, and a common cache shared by the plurality of cores may be included in the multicore processor. In addition, each of the plurality of cores (or some of the plurality of cores) included in the multicore processor may independently read and execute program instructions for implementing a method according to an embodiment of the present disclosure, or all (or some) of the plurality of cores may operate in conjunction to read and execute program instructions for implementing the method according to an embodiment of the present disclosure.

When the method according to an embodiment of the present disclosure includes a plurality of operations, the plurality of operations may be performed by one core among the plurality of cores included in the multicore processor or may be performed by the plurality of cores. For example, when a first operation, a second operation, and a third operation are performed according to an embodiment, all of the first operation, the second operation, and the third operation may be performed by a first core included in the multicore processor, or the first operation and the second operation may be performed by a first core included in the multicore processor and the third operation may be performed by a second core included in the multicore processor.

In embodiments of the present disclosure, the one or more processors may refer to a system on chip (SoC) in which one or more processors and other electronic components are integrated, a single core processor, a multicore processor, or a core included in a single core processor or a multicore processor, and the core may be implemented as a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator, but embodiments of the present disclosure are not limited thereto. However, hereinafter, for convenience of description, the operation of the electronic apparatus 100 will be described using the expression "processor 120".

The processor 120 may input a prompt to the first encoder to obtain a first embedding vector in which the prompt is projected into a multidimensional space, input an input image to the second encoder to obtain a second embedding vector in which the input image is projected into the multidimensional space, and obtain a final image generated using a decoder included in the generative neural network model based on the first embedding vector and the second embedding vector.

Here, the first original encoder and the second original encoder may be trained based on a first sample prompt of a first hierarchy and a first sample input image corresponding to the first sample prompt. For example, when the first sample prompt is input, the first original encoder outputs an embedding vector in which the first sample prompt is projected into the multidimensional space, and when the first sample input image is input, the second original encoder outputs an embedding vector in which the first sample input image is projected into the multidimensional space, and the first original encoder and the second original encoder may be trained such that values of the two embedding vectors become identical.

The first encoder and the second encoder may be obtained by additionally training the first original encoder and the second original encoder based on a second sample prompt of a second hierarchy, which is a lower hierarchy of a first hierarchy, and a second sample input image corresponding to the second sample prompt. For example, if the first original encoder and the second original encoder are trained with a first sample prompt "a Western man sitting on a chair" and a first sample input image corresponding to the first sample prompt, the first encoder and the second encoder may be obtained by additionally training the first original encoder and the second original encoder with a second sample prompt "a Western man Tom sitting on a chair" and a second sample input image corresponding to the second sample prompt. The additional training method may be identical to the above-described training method. For example, when the second sample prompt is input, the first original encoder outputs an embedding vector in which the second sample prompt is projected into a multidimensional space, and when the second sample input image is input, the second original encoder outputs an embedding vector in which the second sample input image is projected into the multidimensional space, and the first original encoder and the second original encoder may be trained such that values of the two embedding vectors become identical.

Here, the hierarchy may be a degree of specification of content included in the prompt. As described above, the prompt "a Western man sitting on a chair" may be a prompt of a higher hierarchy than the prompt "a Western man Tom sitting on a chair". The hierarchy may also be referred to as depth. Alternatively, the hierarchy may be referred to as granularity of object characteristics included in the prompt. However, the present disclosure is not limited thereto, and any term indicating a degree of specification of content included in the prompt may be used instead of the hierarchy.

Additional training may be a method of fixing one of the first original encoder and the second original encoder and additionally training the other of the first original encoder and the second original encoder. In other words, when training is completed, one of the first encoder and the second encoder may be identical to one of the first original encoder and the second original encoder, and the other of the first encoder and the second encoder may be an encoder in which the other of the first original encoder and the second original encoder is additionally trained. For example, when the second original encoder is additionally trained while the first original encoder is fixed, the first encoder may be identical to the first original encoder, and the second encoder may be the additionally trained second original encoder. Alternatively, when the first original encoder is additionally trained while the second original encoder is fixed, the first encoder may be the additionally trained first original encoder, and the second encoder may be identical to the second original encoder.

At least one of the above-described training or additional training may be performed in a server. However, the present disclosure is not limited thereto, and at least one of the training or the additional training may be performed in the electronic apparatus 100.

The decoder may be trained to generate an image based on at least one output of the first original encoder and the second original encoder.

In other words, since the decoder is trained to generate an image based on the first original encoder and the second original encoder before additional training is performed, when the first original encoder and the second original encoder are changed, an output may be changed. However, according to the present disclosure, since one of the first original encoder and the second original encoder is fixed during the additional training process, an existing training state may be maintained. Nevertheless, personalization performance may be improved by additional training of the other of the first original encoder and the second original encoder.

The electronic apparatus 100 may further include a user interface, and the processor 120 may receive a user command corresponding to a partial region of an input image through the user interface, update the second embedding vector based on the user command, and obtain a final image based on the first embedding vector and the updated second embedding vector.

For example, the processor 120 may input the user command to the first encoder to obtain a third embedding vector in which the user command is projected into a multidimensional space, and may update the second embedding vector based on the third embedding vector. For example, the processor 120 may obtain an updated second embedding vector by multiplying the second embedding vector and the third embedding vector on an element-by-element basis.

The processor 120 may obtain a fourth embedding vector by performing a geometric mean on the first embedding vector and the second embedding vector on a corresponding element-by-element basis, and may obtain a final image generated by inputting the fourth embedding vector to the decoder. In this case, the first embedding vector, the second embedding vector, and the fourth embedding vector may have the same size. For example, each of the first embedding vector, the second embedding vector, and the fourth embedding vector may have a form of 1×n. Here, n may be a natural number.

However, the present disclosure is not limited thereto, and the processor 120 may obtain the fourth embedding vector from the first embedding vector and the second embedding vector through various methods. For example, the processor 120 may obtain the fourth embedding vector by performing an arithmetic mean on the first embedding vector and the second embedding vector on a corresponding element-by-element basis.

The electronic apparatus 100 may further include a communication interface, and the processor 120 may control the communication interface to transmit the first embedding vector and the second embedding vector to a server, and may receive a final image from the server through the communication interface. In other words, the server may store the decoder, obtain the final image, and provide the final image to the electronic apparatus 100. Here, the decoder may have a capacity greater than a sum of capacities of the first original encoder and the second original encoder or a sum of capacities of the first encoder and the second encoder. In other words, since the electronic apparatus 100 needs to store only the first encoder and the second encoder, a storage space of the electronic apparatus 100 may be saved. In addition, since only the first original encoder and the second original encoder having relatively smaller capacities than the decoder are additionally trained, a training cost may be reduced. Further, since information transmitted to the server is the first embedding vector and the second embedding vector, personal information may be protected.

However, the present disclosure is not limited thereto, and the electronic apparatus 100 may store the decoder. In this case, the processor 120 may directly obtain the final image using the decoder. In addition, the processor 120 may control the communication interface to transmit the fourth embedding vector to the server instead of the first embedding vector and the second embedding vector.

Functions related to artificial intelligence according to the present disclosure may be operated through the processor 120 and the memory 110.

The processor 120 may be configured as one or a plurality of processors. In this case, the one or the plurality of processors may be a general-purpose processor such as a central processing unit (CPU), an application processor (AP), or a digital signal processor (DSP), a graphics-dedicated processor such as a graphics processing unit (GPU) or a vision processing unit (VPU), or an artificial intelligence-dedicated processor such as a neural processing unit (NPU).

The one or the plurality of processors may control processing of input data according to predefined operation rules or an artificial intelligence model stored in the memory 110. Alternatively, when the one or the plurality of processors are artificial intelligence-dedicated processors, the artificial intelligence-dedicated processors may be designed in a hardware structure specialized for processing of a specific artificial intelligence model. The predefined operation rules or the artificial intelligence model are characterized in that they are created through training.

Here, being created through training means that a predefined operation rule or an artificial intelligence model configured to perform a desired characteristic (or objective) is created by training a basic artificial intelligence model using a plurality of training data by a learning algorithm. Such training may be performed in a device itself in which artificial intelligence according to the present disclosure is performed, or may be performed through a separate server and/or system. Examples of the learning algorithm include supervised learning, unsupervised learning, semi-supervised learning, or reinforcement learning, but are not limited to the above-described examples.

The artificial intelligence model may include a plurality of neural network layers. Each of the plurality of neural network layers has a plurality of weight values, and performs neural network computation through computation between a result of a previous layer and the plurality of weight values. The plurality of weight values included in the plurality of neural network layers may be optimized by a training result of the artificial intelligence model. For example, the plurality of weight values may be updated such that a loss value or a cost value obtained in the artificial intelligence model during a training process is reduced or minimized.

An artificial neural network may include a deep neural network (DNN), and for example, may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a generative adversarial network (GAN), or a deep Q-network, but is not limited thereto.

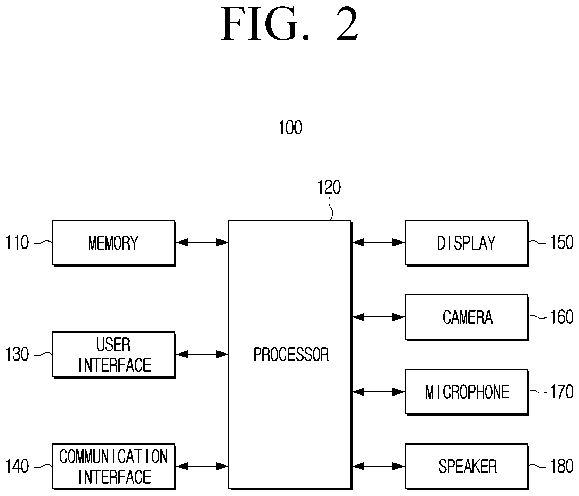

FIG. 2 is a block diagram illustrating a detailed configuration of an electronic apparatus according to an embodiment. The electronic apparatus 100 may include memory 110 and a processor 120. The electronic apparatus 100 may further include a user interface 130, a communication interface 140, a display 150, a camera 160, a microphone 170, and a speaker 180. Among the components illustrated in FIG. 2, detailed descriptions of portions overlapping with those illustrated in FIG. 1 will be omitted.

The user interface 130 may be implemented as a button, a touch pad, a mouse, a keyboard, or the like, or may be implemented as a touch screen capable of performing both a display function and a manipulation input function. Here, the button may be various types of buttons such as a mechanical button, a touch pad, a wheel, etc., formed in any region such as a front portion, a side portion, or a rear portion of an exterior of the electronic apparatus 100.

The communication interface 140 is configured to perform communication with various types of external apparatuses according to various types of communication methods. For example, the electronic apparatus 100 may perform communication with a server through the communication interface 140.

The communication interface 140 may include a wireless fidelity module (Wi-Fi module), a Bluetooth module, an infrared communication module, and a wireless communication module. Here, each communication module may be implemented in a form of at least one hardware chip.

The wireless fidelity module (Wi-Fi module) and the Bluetooth module perform communication using a wireless fidelity method (Wi-Fi method) and a Bluetooth method, respectively. When using the wireless fidelity module (Wi-Fi module) or the Bluetooth module, various connection information such as a service set identifier (SSID) and a session key are first transmitted and received, and a communication connection is established using the same, and then various pieces of information may be transmitted and received. The infrared communication module performs communication according to an infrared data association (IrDA) technology for wirelessly transmitting data over a short distance using infrared rays between visible light and millimeter waves.

The wireless communication module may include at least one communication chip performing communication according to various wireless communication standards such as Zigbee, third generation (3G), third generation partnership project (3GPP), long term evolution (LTE), long term evolution-advanced (LTE-A), fourth generation (4G), and fifth generation (5G), in addition to the above-described communication methods.

Alternatively, the communication interface 140 may include a wired communication interface such as high definition multimedia interface (HDMI), display port (DP), thunderbolt, universal serial bus (USB), red green blue (RGB), D-SUB, or digital visual interface (DVI).

In addition, the communication interface 140 may further include at least one wired communication module performing communication using a local area network (LAN) module, an Ethernet module, or a pair cable, a coaxial cable, or an optical fiber cable.

The display 150 is configured to display content, and may be implemented as various types of displays such as a liquid crystal display (LCD), an organic light emitting diodes display (OLED display), or a plasma display panel (PDP). The display 150 may further include a driving circuit and a backlight unit, which may be implemented in forms such as an amorphous silicon thin film transistor (a-Si TFT), a low temperature poly silicon (LTPS) thin film transistor (TFT), an organic thin film transistor (OTFT), and the like. Meanwhile, the display 150 may be implemented as a touch screen combined with a touch sensor, a flexible display, a three-dimensional display (3D display), and the like.

The camera 160 is configured to capture a still image or a moving image. The camera 160 may capture a still image at a specific point in time, but may also continuously capture still images. The camera 160 may capture at least one direction of the electronic apparatus 100.

The camera 160 includes a lens, a shutter, an aperture, a solid-state imaging device, an analog front end (AFE), and a timing generator (TG). The shutter adjusts a time during which light reflected from an object enters the camera 160, and the aperture mechanically increases or decreases a size of an opening through which light enters to adjust an amount of light incident on the lens. When light reflected from an object is accumulated as electric charges, the solid-state imaging device outputs an image formed by the electric charges as an electrical signal. The timing generator (TG) outputs a timing signal for reading out pixel data of the solid-state imaging device, and the analog front end (AFE) samples and digitizes the electrical signal output from the solid-state imaging device.

The processor 120 may use an image captured through the camera 160 as an input image.

The microphone 170 is configured to receive a sound and convert the sound into an audio signal. The microphone 170 is electrically connected to the processor 120, and may receive a sound under control of the processor 120.

For example, the microphone 170 may be integrally formed in an upper portion, a front direction, or a side direction of the electronic apparatus 100. Alternatively, the microphone 170 may be provided in a remote controller separate from the electronic apparatus 100. In this case, the remote controller may receive a sound through the microphone 170, and provide the received sound to the electronic apparatus 100.

The microphone 170 may include various configurations such as a microphone for collecting a sound in an analog form, an amplifier circuit for amplifying the collected sound, an analog-to-digital converter (A/D converter) circuit for sampling the amplified sound and converting the same into a digital signal, and a filter circuit for removing a noise component from the converted digital signal.

Meanwhile, the microphone 170 may be implemented in a form of a sound sensor, and any configuration capable of collecting a sound may be used without limitation.

The processor 120 may receive a user utterance voice through the microphone 170, and may obtain a prompt from the user utterance voice.

The speaker 180 is configured to output various audio data processed by the processor 120 as well as various notification sounds or voice messages.

As described above, the electronic apparatus 100 may provide a generative service with improved personalization performance while reducing a training cost by additionally training the first original encoder and the second original encoder.

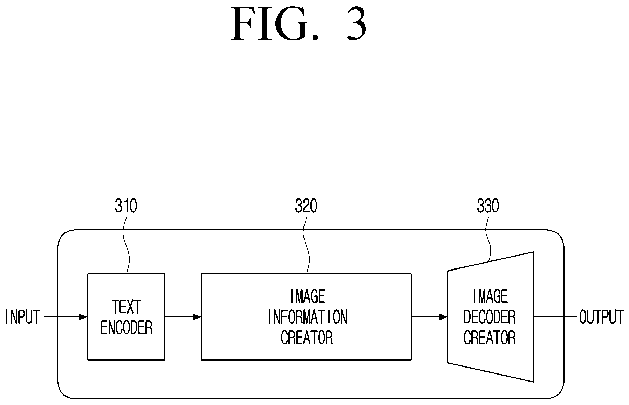

Hereinafter, an operation of the electronic apparatus 100 will be described in more detail with reference to FIGS. 3 to 11. In FIGS. 3 to 11, individual embodiments are described for convenience of explanation. However, the individual embodiments of FIGS. 3 to 11 may be implemented in combination or in a state in which the order is changed.

FIG. 3 is a view provided to explain a generative neural network model according to an embodiment.

The generative neural network model may include an encoder and a decoder. For example, as illustrated in FIG. 3, the generative neural network model may include an encoder (Text Encoder 310) and decoders (Image Information Creator 320, Image Decoder Creator 330).

The encoder 310 may include a first encoder for projecting a prompt into a multidimensional space and a second encoder for projecting an input image into a multidimensional space. The first encoder outputs a first embedding vector in which the prompt is projected into the multidimensional space, and the second encoder may output a second embedding vector in which the input image is projected into the multidimensional space.

The encoder 310 may output a fourth embedding vector based on the first embedding vector and the second embedding vector to the decoders 320 and 330. For example, the encoder 310 may obtain the fourth embedding vector by performing a geometric mean on the first embedding vector and the second embedding vector on a corresponding element-by-element basis, and may output the fourth embedding vector to the decoders 320 and 330.

The decoders 320 and 330 may generate a final image based on the fourth embedding vector, and output the generated final image.

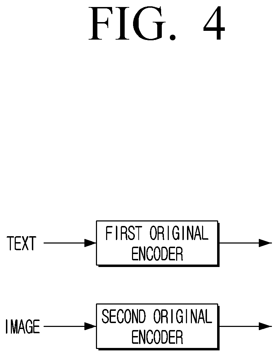

FIGS. 4 to 7 are views provided to explain operations according to additional training according to an embodiment.

First, the first original encoder and the second original encoder may be trained based on a first sample prompt (text) of a first hierarchy and a first sample input image (image) corresponding to the first sample prompt, as illustrated in FIG. 4. For example, the first original encoder may receive the first sample prompt as input and output an embedding vector corresponding to the first sample prompt, and the second original encoder may receive the first sample image as input and output an embedding vector corresponding to the first sample image, and the first original encoder and the second original encoder may be trained such that the two embedding vectors become identical.

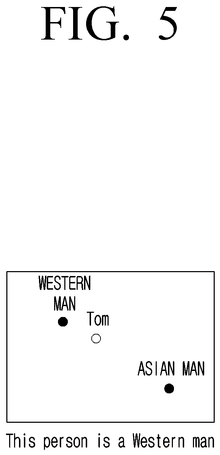

However, since the first sample prompt is a prompt of the first hierarchy, personalization performance may be relatively low. For example, as illustrated in FIG. 5, the first original encoder and the second original encoder may be in a state of being trained with a first sample prompt such as "Western man" or "Asian man" and a first sample input image corresponding to the first sample prompt. In this case, when a prompt "Tom" is input to the first original encoder or an input image corresponding to "Tom" is input to the second original encoder, the encoder may output information identifying whether it is a "Western man" or an "Asian man", but may not output information about "Tom".

On the other hand, when using the first encoder and the second encoder obtained by additionally training the first original encoder and the second original encoder, personalization performance may be further improved.

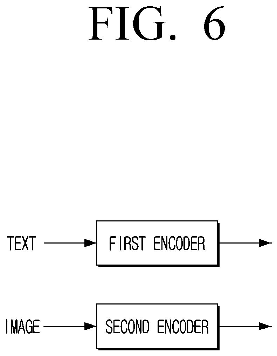

First, the first original encoder and the second original encoder may be in a state in which training is completed by a method as in FIG. 4. Subsequently, in order to obtain the first encoder and the second encoder, the first original encoder and the second original encoder may be additionally trained. For example, as illustrated in FIG. 6, the first original encoder and the second original encoder may be additionally trained based on a second sample prompt (text) of a second hierarchy, which is a lower hierarchy of the first hierarchy, and a second sample input image (image) corresponding to the second sample prompt. For example, the first original encoder may receive the second sample prompt as input and output an embedding vector corresponding to the second sample prompt, and the second original encoder may receive the second sample image as input and output an embedding vector corresponding to the second sample image, and the first original encoder and the second original encoder may be trained such that the two embedding vectors become identical.

At this time, the additional training may be a method of fixing one of the first original encoder and the second original encoder and additionally training the other of the first original encoder and the second original encoder. Accordingly, one of the first encoder and the second encoder may be identical to one of the first original encoder and the second original encoder, and the other of the first encoder and the second encoder may be an encoder in which the other of the first original encoder and the second original encoder is additionally trained. For example, when the second original encoder is additionally trained while the first original encoder is fixed, the first encoder may be identical to the first original encoder, and the second encoder may be the additionally trained second original encoder. Alternatively, when the first original encoder is additionally trained while the second original encoder is fixed, the first encoder may be the additionally trained first original encoder, and the second encoder may be identical to the second original encoder.

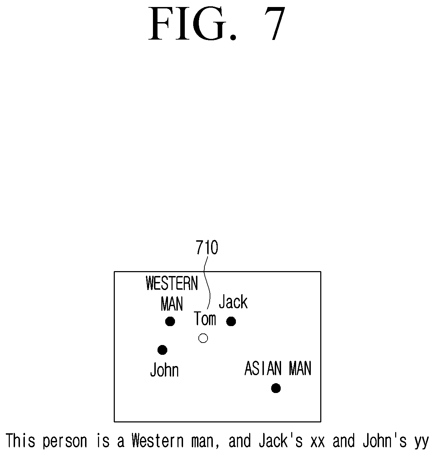

For convenience of explanation, assuming that the first encoder is identical to the first original encoder, the second encoder may be in a state of being trained with not only "Western man" and "Asian man" but also second sample input images such as "Jack" and "John", as shown in FIG. 7. In this case, when an input image 710 including "Tom" is input to the second encoder, the second encoder may output information related to xx (for example, a nose) of "Jack" and yy (for example, a mouth) of "John" while being a "Western man".

Here, "Western man" or "Asian man" may be an anchor resulting from training of the first original encoder and the second original encoder. The anchor may be a point at which characteristics of an object are projected into a multidimensional space.

According to the present disclosure, since one of the first original encoder and the second original encoder is fixed during the additional training process, an anchor in an existing training process may be maintained as it is. Thereafter, when additional training is performed, for example, the second original encoder updated by the additional training may be able to identify additional anchors such as "Jack" and "John". In other words, due to maintenance of existing anchors, existing performance may be maintained even without additional training of the decoder, and personalization performance may be improved due to the additional anchors.

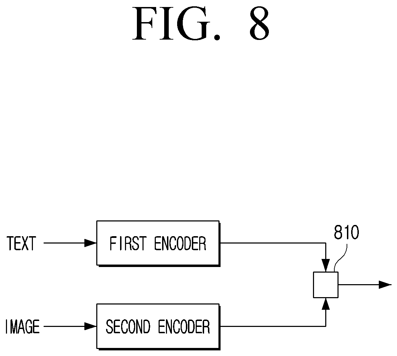

FIG. 8 is a view provided to explain a method of processing embedding vectors output from a first encoder and a second encoder according to an embodiment.

The processor 120 may obtain the fourth embedding vector based on the first embedding vector and the second embedding vector. For example, as illustrated in FIG. 8, the processor 120 may obtain the fourth embedding vector by performing a geometric mean 810 on the first embedding vector and the second embedding vector on a corresponding element-by-element basis.

The processor 120 may operate such that the fourth embedding vector is processed in the decoder.

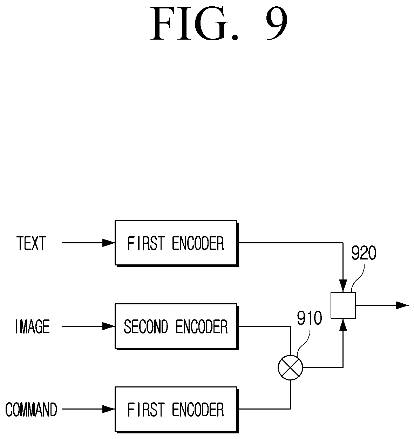

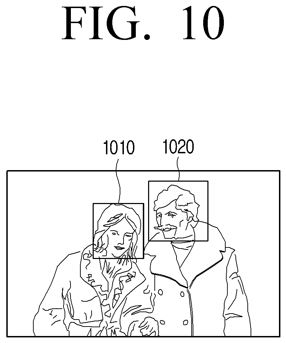

FIGS. 9 and 10 are views provided to explain a method of specifying a partial region of an input image according to an embodiment.

The processor 120 may receive a user command corresponding to a partial region of the input image, and may update the second embedding vector based on the user command. For example, as illustrated in FIG. 9, the processor 120 may input an input image to the second encoder to obtain the second embedding vector, receive a user command corresponding to a partial region of the input image, input the user command to the first encoder to obtain a third embedding vector, and obtain an updated second embedding vector by performing a multiplication operation 910 on the second embedding vector and the third embedding vector on a corresponding element-by-element basis. For example, when a user command to use a person on a left side in an input image is received as shown in FIG. 10, the first encoder outputs a third embedding vector having a high weight for a left region according to the user command, and when the second embedding vector corresponding to the input image and the third embedding vector are multiplied on a corresponding element-by-element basis, an updated second embedding vector in which a person 1010 on the left side is highlighted more than a person 1020 on the right side may be obtained.

The processor 120 may input the prompt to the first encoder to obtain the first embedding vector, and may obtain the fourth embedding vector by performing a geometric mean 920 on the first embedding vector and the updated second embedding vector on a corresponding element-by-element basis. In the case of the above-described example, the fourth embedding vector may include information on the person 1010 on the left side as main information.

In FIG. 9, for convenience of explanation, two first encoders are illustrated, but the first encoder may be implemented as a single encoder. In other words, when the prompt and the input image are received, the processor 120 may input the prompt to the first encoder to obtain the first embedding vector, and input the input image to the second encoder to obtain the second embedding vector. The processor 120 may store the first embedding vector in the memory 110, and when a user command corresponding to a partial region of the input image is received, may input the user command to the first encoder to obtain the third embedding vector. When operating in this manner, the first encoder may operate as a single encoder.

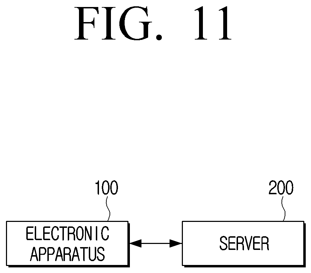

FIG. 11 is a block diagram illustrating a configuration of an electronic system according to an embodiment.

The electronic system may include an electronic apparatus 100 and a server 200.

The electronic apparatus 100 includes the first encoder and the second encoder, and may transmit the first embedding vector and the second embedding vector respectively output from the first encoder and the second encoder to the server 200. Alternatively, the electronic apparatus 100 may also transmit, to the server 200, the fourth embedding vector obtained by performing a geometric mean on the first embedding vector and the second embedding vector on a corresponding element-by-element basis.

The server 200 stores the decoder, and may receive the first embedding vector and the second embedding vector from the electronic apparatus 100 or may receive the fourth embedding vector. When the first embedding vector and the second embedding vector are received, the server 200 may obtain the fourth embedding vector by performing a geometric mean on the first embedding vector and the second embedding vector on a corresponding element-by-element basis, and may obtain a final image by inputting the fourth embedding vector to the decoder. Alternatively, when the fourth embedding vector is received, the server 200 may also obtain the final image by inputting the fourth embedding vector to the decoder. The server 200 may transmit the final image to the electronic apparatus 100.

Through such an operation, the electronic apparatus 100 may save a storage space by storing only the first encoder and the second encoder having relatively smaller capacities than the decoder. In addition, the electronic apparatus 100 provides the first embedding vector and the second embedding vector to the server 200 or provides the fourth embedding vector to the server 200, and since the first embedding vector, the second embedding vector, and the fourth embedding vector are processed information, personal information can be protected.

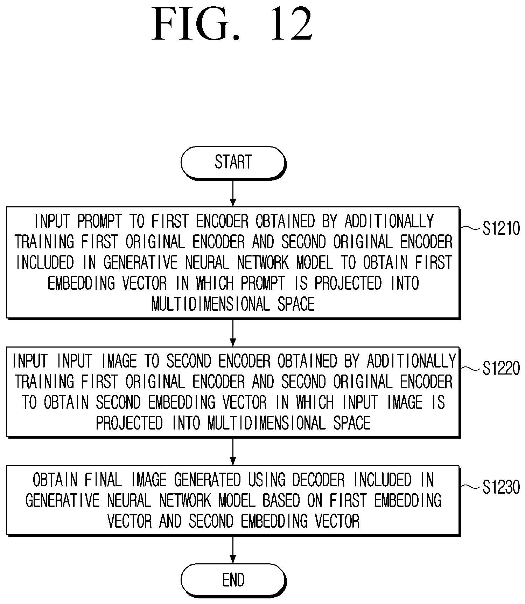

FIG. 12 is a flowchart provided to explain a control method of an electronic apparatus according to an embodiment.

First, a first embedding vector in which a prompt is projected into a multidimensional space is obtained by inputting the prompt to a first encoder obtained by additionally training a first original encoder and a second original encoder included in a generative neural network model (S1210). Then, a second embedding vector in which an input image is projected into the multidimensional space is obtained by inputting the input image to a second encoder obtained by additionally training the first original encoder and the second original encoder (S1220). Subsequently, a final image generated using a decoder included in the generative neural network model is obtained based on the first embedding vector and the second embedding vector (S1230). Here, the first original encoder and the second original encoder are trained based on a first sample prompt of a first hierarchy and a first sample input image corresponding to the first sample prompt, and the first encoder and the second encoder may be obtained by additionally training the first original encoder and the second original encoder based on a second sample prompt of a second hierarchy, which is a lower hierarchy of the first hierarchy, and a second sample input image corresponding to the second sample prompt.

Also, the additional training may be a method of fixing one of the first original encoder and the second original encoder and additionally training the other of the first original encoder and the second original encoder.

One of the first encoder and the second encoder may be identical to one of the first original encoder and the second original encoder, and the other of the first encoder and the second encoder may be an encoder in which the other of the first original encoder and the second original encoder is additionally trained.

Also, the decoder may be trained to generate an image based on at least one output of the first original encoder or the second original encoder.

The method may further include receiving a user command corresponding to a partial region of the input image and updating the second embedding vector based on the user command, and in the obtaining of the final image (S1230), the final image may be obtained based on the first embedding vector and the updated second embedding vector.

Also, in the updating, the user command is input to the first encoder to obtain a third embedding vector in which the user command is projected into the multidimensional space, and the second embedding vector may be updated based on the third embedding vector.

Further, in the obtaining of the final image (S1230), a fourth embedding vector is obtained by performing a geometric mean on the first embedding vector and the second embedding vector on a corresponding element-by-element basis, and the final image generated by inputting the fourth embedding vector to the decoder may be obtained.

Also, in the obtaining of the final image (S1230), the first embedding vector and the second embedding vector may be transmitted to the server, and the final image may be received from the server.

Further, the decoder may have a capacity greater than a sum of capacities of the first original encoder and the second original encoder or a sum of capacities of the first encoder and the second encoder.

According to various embodiments of the present disclosure as described above, the electronic apparatus may provide a generative service with improved personalization performance while reducing a training cost by additionally training the first original encoder and the second original encoder.

Meanwhile, according to an embodiment of the present disclosure, the various embodiments described above may be implemented as software including instructions stored in a machine-readable storage medium readable by a machine (for example, a computer). The machine may be an apparatus capable of calling the stored instructions from the storage medium and operating according to the called instructions, and may include the electronic apparatus (for example, electronic apparatus A) according to the disclosed embodiments. When the instructions are executed by a processor, the processor may perform functions corresponding to the instructions directly or by using other components under control of the processor. The instructions may include code generated or executed by a compiler or an interpreter. The machine-readable storage medium may be provided in the form of a non-transitory storage medium. Here, "non-transitory" only means that the storage medium does not include a signal and is tangible, and does not distinguish whether data is stored in the storage medium semi-permanently or temporarily.

Also, according to an embodiment of the present disclosure, the methods according to the various embodiments described above may be provided included in a computer program product. The computer program product may be traded between a seller and a buyer as a commodity. The computer program product may be distributed online in the form of a machine-readable storage medium (for example, a compact disc read only memory (CD-ROM)) or through an application store (for example, Play Store^{™}). In the case of online distribution, at least a portion of the computer program product may be at least temporarily stored or temporarily generated in a storage medium such as a server of a manufacturer, a server of an application store, or a memory of a relay server.

Further, according to an embodiment of the present disclosure, the various embodiments described above may be implemented in a recording medium readable by a computer or a similar apparatus using software, hardware, or a combination thereof. In some cases, embodiments described in the present specification may be implemented in the processor itself. According to a software implementation, embodiments such as procedures and functions described in the present specification may be implemented as separate software. Each software may perform one or more functions and operations described in the present specification.

Meanwhile, computer instructions for performing processing operations of a device according to the various embodiments described above may be stored in a non-transitory computer-readable medium. When executed by a processor of a specific device, the computer instructions stored in the non-transitory computer-readable medium cause the specific device to perform the processing operations in the device according to the various embodiments described above. The non-transitory computer-readable medium means not a medium storing data for a short moment such as a register, a cache, or a memory, but a medium storing data semi-permanently and readable by a device. Specific examples of the non-transitory computer-readable medium may include a compact disc (CD), a digital versatile disc (DVD), a hard disk, a Blu-ray disc, a universal serial bus (USB), a memory card, and a read only memory (ROM).

Also, each of the components (for example, modules or programs) according to the various embodiments described above may be composed of a singular entity or a plurality of entities, and some sub-components of the above-described corresponding sub-components may be omitted, or other sub-components may be further included in various embodiments. Alternatively or additionally, some components (for example, modules or programs) may be integrated into one entity, and may perform the same or similar functions performed by the respective corresponding components before integration. Operations performed by a module, a program, or another component according to various embodiments may be executed sequentially, in parallel, repetitively, or heuristically, or at least some operations may be executed in a different order, omitted, or other operations may be added.

While preferred embodiments of the present disclosure have been illustrated and described above, the present disclosure is not limited to the above-described specific embodiments, and various modifications may be made by those skilled in the art to which the present disclosure pertains without departing from the gist of the present disclosure as claimed in the claims, and such modifications should not be individually understood from the technical idea or scope of the present disclosure.

## Claims

1. An electronic apparatus comprising:
memory storing a first encoder and a second encoder obtained by additionally training a first original encoder and a second original encoder included in a generative neural network model; and
one or more processors connected to the memory and configured to control the electronic apparatus,
wherein the processor is configured to:
obtain a first embedding vector in which a prompt is projected into a multidimensional space by inputting the prompt to the first encoder;
obtain a second embedding vector in which an input image is projected into the multidimensional space by inputting the input image to the second encoder; and
obtain a final image generated using a decoder included in the generative neural network model based on the first embedding vector and the second embedding vector;
wherein the first original encoder and the second original encoder are trained based on a first sample prompt of a first hierarchy and a first sample input image corresponding to the first sample prompt; and
wherein the first encoder and the second encoder are obtained by additionally training the first original encoder and the second original encoder based on a second sample prompt of a second hierarchy, which is a lower hierarchy of the first hierarchy, and a second sample input image corresponding to the second sample prompt.

2. The electronic apparatus of claim 1, wherein the additional training is a method of fixing one of the first original encoder and the second original encoder and additionally training the other of the first original encoder and the second original encoder.

3. The electronic apparatus of claim 2, wherein one of the first encoder and the second encoder is identical to one of the first original encoder and the second original encoder; and
wherein the other of the first encoder and the second encoder is an encoder obtained by additionally training the other of the first original encoder and the second original encoder.

4. The electronic apparatus of claim 1, wherein the decoder is trained to generate an image based on an output of at least one of the first original encoder or the second original encoder.

5. The electronic apparatus of claim 1, further comprising:
a user interface,
wherein the processor is configured to:
receive a user command corresponding to a partial region of the input image through the user interface;
update the second embedding vector based on the user command; and
obtain the final image based on the first embedding vector and the updated second embedding vector.

6. The electronic apparatus of claim 5, wherein the processor is configured to:
obtain a third embedding vector in which the user command is projected into the multidimensional space by inputting the user command to the first encoder; and
update the second embedding vector based on the third embedding vector.

7. The electronic apparatus of claim 1, wherein the processor is configured to:
obtain a fourth embedding vector by performing a geometric mean on the first embedding vector and the second embedding vector on a corresponding element-by-element basis; and
obtain the final image generated by inputting the fourth embedding vector to the decoder.

8. The electronic apparatus of claim 1, further comprising:
a communication interface,
wherein the processor is configured to:
control the communication interface to transmit the first embedding vector and the second embedding vector to a server; and
receive the final image from the server through the communication interface.

9. The electronic apparatus of claim 1, wherein the decoder has a capacity greater than a sum of capacities of the first original encoder and the second original encoder or a sum of capacities of the first encoder and the second encoder.

10. A control method of an electronic apparatus, comprising:
obtaining a first embedding vector in which a prompt is projected into a multidimensional space by inputting the prompt to a first encoder obtained by additionally training a first original encoder and a second original encoder included in a generative neural network model;
obtaining a second embedding vector in which an input image is projected into the multidimensional space by inputting the input image to a second encoder obtained by additionally training the first original encoder and the second original encoder; and
obtaining a final image generated using a decoder included in the generative neural network model based on the first embedding vector and the second embedding vector,
wherein the first original encoder and the second original encoder are trained based on a first sample prompt of a first hierarchy and a first sample input image corresponding to the first sample prompt; and
wherein the first encoder and the second encoder are obtained by additionally training the first original encoder and the second original encoder based on a second sample prompt of a second hierarchy, which is a lower hierarchy of the first hierarchy, and a second sample input image corresponding to the second sample prompt.

11. The method of claim 10, wherein the additional training is a method of fixing one of the first original encoder and the second original encoder and additionally training the other of the first original encoder and the second original encoder.

12. The method of claim 11, wherein one of the first encoder and the second encoder is identical to one of the first original encoder and the second original encoder; and wherein the other of the first encoder and the second encoder is an encoder obtained by additionally training the other of the first original encoder and the second original encoder.

13. The method of claim 10, wherein the decoder is trained to generate an image based on an output of at least one of the first original encoder or the second original encoder.

14. The method of claim 10, further comprising:
receiving a user command corresponding to a partial region of the input image; and
updating the second embedding vector based on the user command,
wherein the obtaining the final image comprises obtaining the final image based on the first embedding vector and the updated second embedding vector.

15. The method of claim 14, wherein the updating comprises:
obtaining a third embedding vector in which the user command is projected into the multidimensional space by inputting the user command to the first encoder; and updating the second embedding vector based on the third embedding vector.
